# EUROPÄISCHE PATENTANMELDUNG

(11) **EP 1 798 430 A2**
(43) Veröffentlichungstag der Anmeldung: **20.06.2007**
(21) Anmeldenummer: 06025278.0
(22) Anmeldetag: 07.12.2006
(51) Int. Cl.: F16C 11/04

(54) **Zwischenscheibe für benachbarte Glieder**

(30) Priorität: 17.12.2005 DE 102005060459
(71) Anmelder: Magna Car Top Systems GmbH, 74321 Bietigheim-Bissingen (DE)
(72) Erfinder: Schumacher, Thorsten, 25495 Kummerfeld (DE)

(57) **Zusammenfassung**

Diese Zwischenscheibe (7) ist in Verbindung mit benachbarten Gliedern (1,2) einsetzbar, die vorzugsweise relativbeweglich sind, welche Anschlagseiten (20,21) für die Glieder aufweisende Zwischenscheibe (7) ringförmig ausgebildet ist, einen Verbindungsbolzen (11) für die Glieder (1,2) mit einer Ringscheibe umgibt und zum Ausgleich von Axialspiel zwischen den Gliedern (1,2) dient.

Um die Zwischenscheibe (7) zu optimieren, ist sie aus Kunststoff hergestellt und auf beiden Anschlagseiten (20,21) mit an den Gliedern (1,2) anliegenden Stützorgane versehen, die radial zueinander versetzt an der Ringscheibe angeordnet sind, wobei zwischen den Stützorganen Federabschnitte vorgesehen sind.

## Beschreibung

Die Erfindung bezieht sich auf eine Zwischenscheibe für benachbarte Glieder, die vorzugsweise relativbeweglich zueinander ausgebildet sind nach dem Oberbegriff des Patentanspruchs 1.

An eine Gelenkvorrichtung, bestehend aus zwei relativbeweglichen Elementen, die als Lenker eines Gestänges für ein bewegliches Dach eines Kraftfahrzeugs eingesetzt -nicht veröffentlichte Patentanmeldung 10 2005 057 010.0- werden, werden hohe Anforderungen bezüglich Funktion -Leichtgängigkeit, geringes Spiel- und gute Standfestigkeit über eine definiert Zeit gestellt.

Es ist eine Unterlegscheibe für eine Schraubenbefestigung an einem emaillierten Blech bekannt, DE 6 906 647 U1, bei der ein äußerer Rand der Unterlegscheibe als Auflagerand ausgebildet ist. Dagegen ist ein Innenteil der Unterlegscheibe mit einer Schraubenaufnahme-Bohrung mit einem Durchzug versehen. Die Schraubenaufnahme-Bohrung kann als konische Bohrung dargestellt oder auf einer topfförmigen Ausprägung angeordnet sein.

In der DE 27 43 795 A1 wird eine Schraube mit einem Schraubenkopf und einem mit einem Gewinde versehener Bolzen behandelt, der in ein Aufnahmeteil hineingedreht ist. Zwischen Schraubenkopf und Aufnahmeteil sind ein Federring und eine Unterlegscheibe angeordnet. Wird die Schraube angezogen, wo werden die W-förmige Unterlegscheibe und der Federring plastisch verformt.

Aus der DE 197 27 310 C2 geht eine Lagerung für eine Schwinge mit einer Buchse hervor, an deren Außenseite die Schwinge schwenkbeweglich aufgenommen und zwischen zwei Anschlägen axial geführt ist. Dabei ist zwischen den Anschlägen und der Schwinge eine Ringscheibe aus einem Kunststoffmaterial vorgesehen. Mit dieser Ausführung wird angestrebt, eine Lagerung bereitzustellen, die nach der Montage spielfrei arbeitet.

Es ist Aufgabe der Erfindung, eine Zwischenscheibe für benachbarte Glieder, die relativbeweglich zueinander ausgebildet sind, zu schaffen, die sich durch besondere Haltbarkeit, Korrosionsarmut und niedrige Reibung auszeichnet. Dabei sollte die Zwilschenscheibe aber auch in der Weise wirken, dass das Lagerspiel in axialer Richtung gering ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Zwischenscheibe für die relativbeweglichen Glieder in der beanspruchten technischen Ausprägung eine hohe Standzeit sicherstellt, und weil aus definiertem Kunststoff bestehend, ist sie auch wenig korrosionsanfällig. Hervorzuheben ist auch, dass die Zwischenscheibe ein günstiges Reibverhalten besitzt und zur Axialspielreduktion beiträgt. Die Zwischenscheibe eignet sich u.a. für Gelenkvorrichtungen mit drehbaren Lenkern, wie sie bei beweglichen Dächern von Kraftfahrzeugen eingesetzt werden, und sie gleicht axiale Toleranzen bei derartigen Gelenkvorrichtungen vorbildlich aus. Hierzu tragen die Vorsehung und die Anordnung der als Auflageebenen dargestellten Stützorgane und die Federabschnitte bei. Letztere sind mit der gewählten Konfiguration leicht an der Zwischenscheibe realisierbar.

In der Zeichnung wird ein Ausführungsbeispiel der Erfindung gezeigt, das nachstehend näher erläutert wird.

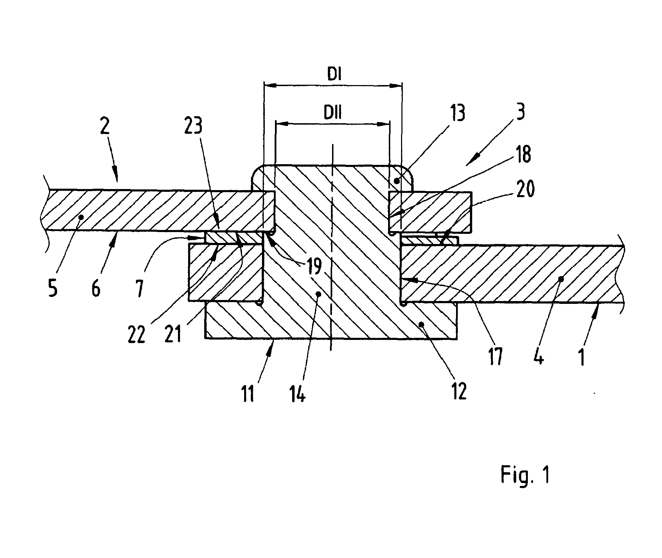

Es zeigen
Fig. 1 einen Schnittt durch benachbarte Glieder und eine Zwischenscheibe nach der Erfindung,
Fig. 2 eine Ansicht von oben auf die Zwischenscheibe,
Fig. 3 eine Schrägansicht der Zwischenscheibe.

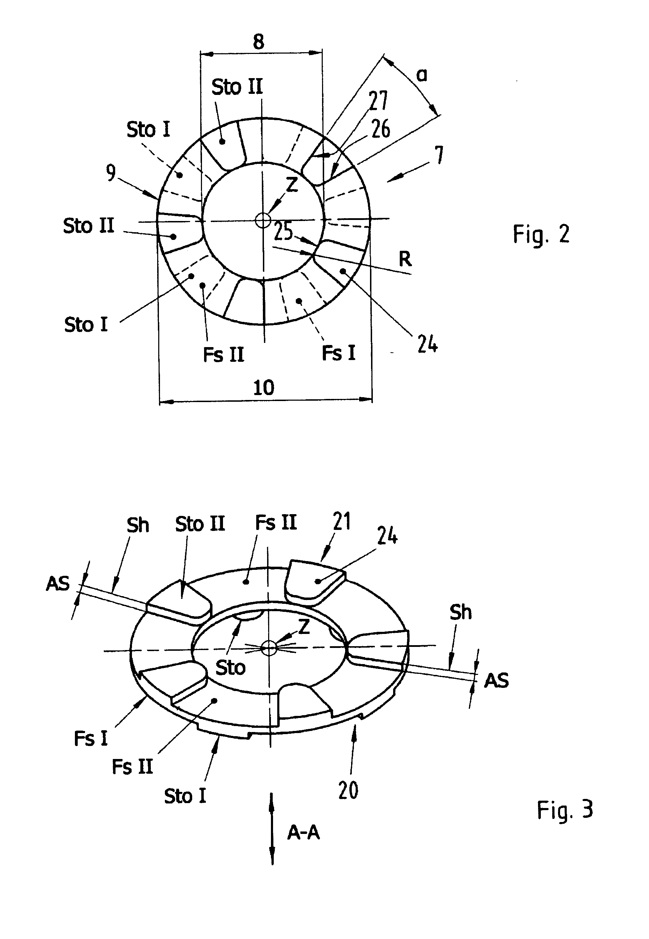

Zwei benachbarte, übereinander liegende Glieder 1 und 2 sind teil einer Gelenkverbindung 3, und sie werden durch Lenker 4 und 5 gebildet, die in ein Betätigungssystem 6 eines beweglichen Dachs - siehe bspw. EP 0 835 779 B1 - eines Kraftfahrzeugs integriert sind. Die Glieder 1 und 2 sind lediglich durch eine ringförmige Zwischenscheibe 7 getrennt, die eine Bohrung 8, eine Ringscheibe 9 und einen Außendurchmeser 10 aufweist - Fig. 2 -. Die Zwischenscheibe 7 bzw. die Ringscheibe 9 umgibt einen Verbindungsbolzen 11, der einen ersten Bolzenkopf 12 und einen zweiten Bolzenkopf 13 besitzt; letzterer kann durch einen Nietvorgang gebildet oder als Schraubenmutter dargestellt sein.

Der erste Bolzenkopf 12 stützt sich am Glied 1 ab; der zweite Bolzenkopf 13 am Glied 2. Zwischen erstem Bolzenkopf 12 und zweitem Bolzenkopf 13 erstreckt sich ein Bolzenschaft 14, der Bohrungen 15 und 16 der Glieder 1 und 2 durchdringt. Der Bolzenschaft 14 ist mit Stufenabschnitten 17 und 18 versehen, wobei der Durchmesser DI des Stufenabschnitts 17 größer ist als der Durchmesser DII des Stufenabschnitts 18. Der Stufenabschnitt 17 kann mit einem Anschlag 19 versehen sein, an dem das Glied 2 anliegt.

Die mit Anschlagseiten 20 und 21 für Lagerabschnitte 22 und 23 der Glieder 1 und 2 versehene Zwischenscheibe 7 dient zum Ausgleich von Toleranzen namentlich Axialspiel zwischen den Gliedern 1 und 2 und besteht aus Kunststoff, der hohe Druckfestigkeit bei hoher Dehnung aufweist. Hierfür eignet sich bspw. Polyetraflourethylen PTFE oder ein anderer geeigneter Kunststoff. Die Zwischenscheibe 7 ist auf beiden Anschlagseiten 20 und 21 mit Stützorganen Stol und Stoll versehen, die mit radialem Versatz Vra an der Ringscheibe 9 vorgesehen sind. Zwischen benachbarten Stützorganen Stol oder Stoll verlaufen Federabschnitte Fsl und FSII. Jeder Federabschnitt Fsl oder FsII ist gegenüber der höchsten Stelle Sh der Stützorgane Stol oder Stoll in axialer Richtung Ra der Zwischenscheibe 7 abgesetzt, was mit dem Abstand As verdeutlicht ist.

Die höchsten Stellen Sh der Stützorgane Stol und Stoll sind als Auflageebenen 24 für die Lagerabschnitte 22 und 23 der Glieder 1 und 2 versehen. Die Maßabstimmung der Auflageebenen 24 in axialer Richtung der Zwischenscheibe 7, und zwar auf beiden Anschlagseiten 20 und 21 in Verbindung mit den Federabschnitten Fsl und Fsll erfolgt empirisch.

Eine gute Funktion wird erreicht, wenn auf jeder Anschlagsseite 20 und 21 jeweils fünf gleichmäßig verteilte Auflageebenen 24 eingearbeitet sind. Die Auflageebenen 24 verjüngen sich konisch, und zwar in radialer Richtung des Zentrums Z der Ringscheibe 9 der Zwischenscheibe 7. Dabei ist jede Auflageebene 24 auf einer dem Zentrum Z zugekehrten Seite 25 durch einen Radius R begrenzt. Aus Fig. 2 ist ersichtlich, dass die Auflageebenen 24 radiale Begrenzungen 26 und 27 aufweisen, die einen Winkel α von 22° bis 24° einschließen. Schließlich sind bei der dargestellten Zwischenscheibe 7 die Flächen der Auflageebenen 24 kleiner als die Flächen der Federabschnitte Fsl oder FsII.

## Patentansprüche

1. Zwischenscheibe für benachbarte Glieder, die vorzugsweise relativbeweglich sind, welche Anschlagseiten für die Glieder aufweisende Zwischenscheibe ringförmig ausgebildet ist, einen Verbindungsbolzen für die Glieder mit einer Ringscheibe umgibt und zum Ausgleich von Axialspiel zwischen den Gliedern dient, **dadurch gekennzeichnet, dass** die aus Kunststoff hergestellte Zwischenscheibe (7) auf beiden Anschlagseiten (20 und 21) mit an den Gliedern (1 und 2) anliegenden Stützorgane (Sol und Soll) versehen ist, die mit radialem Versatz (Vra) an der Ringscheibe (9) angeordnet sind, wobei zwischen den Stützorganen (Stol und Stoll) Federabschnitte (Fsl und Fsll) vorgesehen sind.

2. Zwischenscheibe nach Anspruch 1, **dadurch gekennzeichnet, dass** die Federabschnitte (Fsl und Fsll) an der Ringscheibe (9) gegenüber benachbarten Stützorganen (Stol und Stoll) in axialer Richtung (Ra) abgesetzt sind.

3. Zwischenscheibe nach Anspruch 1, **dadurch gekennzeichnet, dass** die Stützorgane (Stol und Stoll) als Auflageebenen (24) für die Glieder (1 und 2) ausgebildet sind.

4. Zwischenscheibe nach den Ansprüchen 1, 3 und 4, **dadurch gekennzeichnet, dass** die Auflageebenen (24) an der Ringscheibe (9) sich in radialer Richtung eines Zentrums (Z) der Zwischenscheibe (7) konisch verjüngen.

5. Zwischenscheibe nach Anspruch 4, **dadurch gekennzeichnet, dass** jede Auflageebene (24) auf einer dem Zentrum (Z) zugekehrten Seite (25) durch einen Radius (R) begrenzt wird.

6. Zwischenscheibe nach den Ansprüchen 1 bis 3, **dadurch gekennzeichnet, dass** auf beiden Anschlagseiten (20 und 21) der Ringscheibe (9) jeweils fünf Auflageebenen (24) vorgesehen sind.

7. Zwischenscheibe nach einem oder mehreren der vorangehenden Ansprüche, **dadurch gekennzeichnet, dass** radiale Begrenzungen (26 und 27) einer jeden Auflageebene (24) einen Winkel zwischen 22° und 24° einschließen.

8. Zwischenscheibe nach einem oder mehreren der vorangehenden Ansprüche, **dadurch gekennzeichnet, dass** die Flächen der Auflageebenen (24 kleiner sind als die Flächen der Federabschnitte (Fsl und Fsll).

9. Zwischenscheibe nach Anspruch 1, **dadurch gekennzeichnet, dass** der Kunststoff hohe Druckfestigkeit bei hoher zulässiger Dehnung aufweist.

10. Zwischenscheibe nach Anspruch 9, **dadurch gekennzeichnet, dass** als Kunststoff eine Art Polyetrafluorethylen (PTFE) verwendet wird.
